# EUROPÄISCHE PATENTSCHRIFT

(11) **EP 3 452 646 B1**
(45) Veröffentlichungstag und Bekanntmachung des Hinweises auf die Patenterteilung: **08.04.2020**
(21) Anmeldenummer: 17706232.0
(22) Anmeldetag: 20.02.2017
(51) Int. Cl.: D07B 1/06, D02G 3/48, B60C 9/00, B60C 9/04

(54) **NUTZFAHRZEUGREIFEN**
COMMERCIAL VEHICLE TYRE
PNEUMATIQUE DE VÉHICULE UTILITAIRE

(30) Priorität: 03.05.2016 DE 102016207561
(43) Veröffentlichungstag der Anmeldung: 13.03.2019
(73) Patentinhaber: Continental Reifen Deutschland GmbH, 30165 Hannover (DE)
(72) Erfinder: FRIES, Volkmar, 30900 Wedemark (DE); OOSTERBAAN, Martijn, 30449 Hannover (DE); SCHUNACK, Michael, 30161 Hannover (DE)
(74) Vertreter: Finger, Karsten
(86) Internationale Anmeldenummer: PCT/EP2017/053754
(87) Internationale Veröffentlichungsnummer: WO 2017/190861

(56) Entgegenhaltungen:
- WO-A1-2011/082844
- DE-A1-102010 000 050
- DE-U1- 29 724 897

## Beschreibung

Die Erfindung betrifft einen Nutzfahrzeugreifen in Radialbauart mit einer Querschnittshöhe von 135 mm bis 200 mm, einem Lastindex von 121 bis 154, mit einer Radialkarkasse mit zumindest einer Karkasslage aus in Gummi eingebetteten Stahlkorden und mit Wulstbereichen mit Wulstkernen und Kernprofilen, um welche die Karkasslage Hochschläge bildend verläuft.

Es ist üblich, in Nutzfahrzeugreifen der eingangs genannten Art = mit einer Querschnittshöhe von 135 mm bis 200 mm und einem Lastindex von 121 bis 154 - die Karkasslage mit Stahlkorden der Konstruktion 3 x 0,20 mm + 9 x 0,175 mm zu verstärken, wobei die Stahlfilamente eine Zugfestigkeit im NT Bereich von 2700 N/mm² bis 3050 N/mm² aufweisen und im Reifenzenit mit 30 bis 45 epdm angeordnet sind. Diese Stahlkorde verleihen zwar der Karkasslage gute Festigkeitseigenschaften, haben jedoch den Nachteil, dass beim Einformen des fertig aufgebauten Rohreifens in die Vulkanisationsform in den Schulterbereichen des Reifens ein Durchdrücken der Stahlkorde durch die Innenschicht stattfinden kann.

Ein Nutzfahrzeugreifen, welcher ein Light-Truck-Reifen ist, ist aus der US 6 719 030 B2 bekannt. Bei diesem Reifen sind die Karkasshochschläge die Wulstkerne unmittelbar umlaufend zur einlagig ausgeführten Karkasslage rückgeführt, sodass radial außerhalb der Wulstkerne keine Kernprofile vorgesehen sind. Erwähnt sind zur Verwendung als Festigkeitsträger in der Karkasslage Stahlkorde unterschiedlicher Konstruktionen, unter anderem auch die Konstruktion 1 + 6, wobei die Filamente eine Zugfestigkeit von mindestens 2500 N/mm² aufweisen und ihr Durchmesser 0,15 mm bis 0,30 mm, vorzugsweise 0,17 mm bis 0,22 mm, betragen kann.

Aus der DE 297 24 897 U1 ist ferner ein Fahrzeugluftreifen mit einer oder mehreren Karkasslagen aus in Gummi eingebetteten Stahlkorden bekannt. Die Stahlkorde der Karkasslagen bestehen aus einer Vielzahl von Filamenten aus feingezogenem Stahldraht und weisen einen Durchmesser von 0,10 mm bis 0,45 mm sowie eine Zugfestigkeit von 2000 x D + 4400 MPa auf, wobei D der Durchmesser der Filamente in mm ist. Die Konstruktion der für die Karkasslage vorgesehenen Korde ist aus einer Vielzahl von möglichen Konstruktionen gewählt. Der Durchmesser der Filamente der Stahlkorde beträgt bevorzugt 0,14 mm bis 0,43 mm, insbesondere 0,18 mm bis 0,38 mm. In der Karkasslage sind die Stahlkorde am Ort der maximalen Reifenbreite mit 3 bis 8 Enden pro cm (epc) (= 30 epdm bis 80 epdm), bevorzugt mit 4 epc bis 7 epc (40 epdm bis 70 epdm), angeordnet.

Die DE 10 2010 000 050 A1 offenbart einen Stahlkord, welcher als Festigkeitsträger für einen Fahrzeugluftreifen geeignet ist. Der Stahlkord besteht aus einer inneren Lage aus mindestens einem Kernfilament mit einer Zugfestigkeit von 3200 N/mm² bis 3500 N/mm² und aus mindestens einer Lage von umhüllenden Filamenten mit einer Zugfestigkeit größer 3800 N/mm². Ein derartiger Stahlkord soll eine hohe Ermüdungsbeständigkeit aufweisen.

Die WO 2011/082844 A1 betrifft einen Fahrzeugluftreifen mit zumindest zwei Gürtellagen und einer ein- oder mehrlagigen Gürtelbandage. Jede Gürtellage enthält Festigkeitsträger aus Stahl und weist bei vorgegebener Dehnung um 1% in Richtung der Längserstreckung der Festigkeitsträger eine Spannung < 17.500 N per dm Breite auf. Die Festigkeitsträger der Gürtellagen verlaufen unter einem Winkel von 18° bis 45° zur Umfangsrichtung. Die Gürtelbandage enthält Festigkeitsträger aus einem nicht-metallischen Werkstoff, wobei die Gürtelbandage bei vorgegebener Dehnung um 1% eine Spannung kleiner 2000 N per dm Breite aufweist.

Der Erfindung liegt die Aufgabe zugrunde, einen Nutzfahrzeugreifen der eingangs genannten Art derart auszuführen, dass die Karkasslage bei guten Festigkeitseigenschaften mit Stahlkorden derart verstärkt ist, dass ein Durchdrücken der Stahlkorde in den Schulterbereichen des Reifens beim Einformen in die Reifenvulkanisationsform nicht mehr stattfindet.

Die gestellte Aufgabe wird erfindungsgemäß dadurch gelöst, dass die Karkasslage mit Stahlkorden der Konstruktion 1 + 6 verstärkt ist, wobei das Kernfilament einen Durchmesser von 0,19 mm bis 0,22 mm aufweist und die Lagenfilamente übereinstimmende Durchmesser von 0,17 mm bis 0,20 mm aufweisen, wobei der Durchmesser der Lagenfilamente um mindestens 0,01 mm kleiner ist als der Durchmesser des Kernfilaments und wobei die Stahlkorde in der Karkasslage im Reifenzenit mit 60 epdm bis 75 epdm angeordnet sind.

Es hat sich herausgestellt, dass es in einem Nutzfahrzeugreifen mit einer Querschnittshöhe von 135 mm bis 200 mm und einem Lastindex von 121 bis 154 für gute Festigkeitseigenschaften der Karkasslage(n) besonders vorteilhaft ist, 1 + 6 Stahlkorde mit Filamenten, die Durchmesser in den erwähnten Bereichen aufweisen, einzusetzen. Besonders vorteilhaft ist die gemäß der Erfindung vorgenommene Abstimmung der eingesetzten Stahlkorde an ihren gegenseitigen Abstand in der Karkasslage. Im Rohreifen ist der gegenseitige Abstand der Stahlkorde geringer als im vulkanisierten Reifen, was, zusätzlich zur speziellen Konstruktion der Stahlkorde, dazu beiträgt, dass ein Durchdrücken der Stahlkorde in den Schulterbereichen des Reifens beim Einformen in die Reifenvulkanisationsform vermieden wird. Darüber hinaus hat sich herausgestellt, dass gemäß der Erfindung ausgeführte Nutzfahrzeugreifen im Gürtel/Laufstreifenbereich eine höhere Durchstichfestigkeit aufweisen als bekannte Ausführungen.

Bei einer bevorzugten Ausführungsform der Erfindung ist der Durchmesser der Lagenfilamente um mindestens 0,02 mm kleiner als der Durchmesser des Kernfilaments. Je nach der Dimension des Nutzfahrzeugreifens und dem Lastindex ist es vorteilhaft, Stahlfilamente bestimmter Festigkeitsklassen zu verwenden. Die Filamente können daher aus Stahl der Festigkeitsklassen NT, HT oder SHT bestehen. Besonders bevorzugt ist eine Ausführung der Filamente mit einer Zugfestigkeit von mindestens 3200 N/mm².

Bevorzugt ist ferner eine Ausführung, bei der die Lagenfilamente mit einer Schlaglänge von 10,0 mm bis 14,0 mm, insbesondere von 12,5 mm, um das Kernfilament verdreht sind.

Bevorzugt ist ferner eine Stahlkordkonstruktion, bei der das Kernfilament einen Durchmesser von 0,20 mm aufweist und die Lagenfilamente jeweils einen Durchmesser von 0,175 mm aufweisen. Gerade die Verwendung solcher Stahlkorde ist gemeinsam mit einer Anordnung unter bestimmten gegenseitigen Abständen besonders gut dafür geeignet, ein Durchdrücken der Stahlkorde in den Schulterbereichen des Reifens beim Einformen in die Reifenvulkanisationsform zu verhindern.

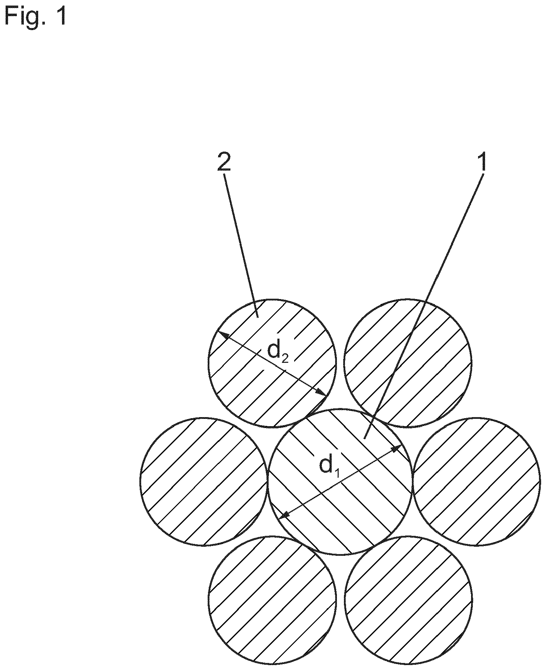

Weitere Merkmale, Vorteile und Einzelheiten der Erfindung werden nun anhand der einzigen Figur, Fig. 1, welche schematisch einen Querschnitt einer Ausführungsvariante eines für eine Karkasslage eines Nutzfahrzeugreifens vorgesehenen Stahlkordes zeigt, näher beschrieben.

Ein erfindungsgemäß ausgeführter Nutzfahrzeugreifen ist ein Nutzfahrzeugreifen in Radialbauart mit einer Querschnittshöhe von 135 mm bis 200 mm und einem Lastindex von 121 bis 154. Der Nutzfahrzeugreifen weist die üblichen Bauteile auf, wie einen profilierten Laufstreifen, einen mehrlagigen, insbesondere mit Stahlkorden verstärkten Gürtelverband, eine Innenschicht, Wulstbereiche mit Wulstkernen und Kernprofilen sowie eine Radialkarkasse aus zumindest einer mit Stahlkorden verstärkten Karkasslage. Die Stahlkorde der Karkasslage verlaufen in den Seitenwänden in radialer Richtung, radial innerhalb des Laufstreifens und des Gürtels in axialer Richtung.

Fig. 1 zeigt einen Querschnitt eines zum Einsatz in der Karkasslage erfindungsgemäß ausgeführter Nutzfahrzeugreifen besonders geeigneten Stahlkordes, welcher die Konstruktion 1 + 6 und dementsprechend ein einziges Kernfilament 1 und sechs mit dessen Außenseite in Kontakt stehende Lagenfilamenten 2 aufweist. Die Lagenfilamente 2 sind in an sich bekannter Weise in S- oder Z-Richtung um das Kernfilament 1 mit einer Schlaglänge von 10,0 mm bis 14,0 mm, vorzugsweise von etwa 12,5 mm, verdrillt.

Das Kernfilament 1 und die Lagenfilamente 2 bestehen aus Stahl der Festigkeitsklassen NT (normal tensile), HT (high tensile) oder SHT (super high tensile). Stahlfilamente der Festigkeitsklasse NT weisen eine Zugfestigkeit von 2700 N/mm² bis 3050 N/mm², Stahlfilamente der Festigkeitsklasse HT eine Zugfestigkeit von 3050 N/mm² bis 3330 N/mm² und Stahlfilamente der Festigkeitsklasse SHT eine Zugfestigkeit von 3350 N/mm² bis 3650 N/mm²auf. Bei einer bevorzugten Ausführung weisen die Filamente 1, 2 eine Zugfestigkeit von mindestens 3200 N/mm² auf.

Das Kernfilament 1 und die Lagenfilamente 2 weisen jeweils einen im Wesentlichen kreisförmigen Querschnitt auf. Das Kernfilament 1 weist einen Durchmesser d₁ von 0,19 mm bis 0,22 mm, vorzugsweise von 0,20 mm, auf. Sämtliche Lagenfilamente 2 weisen überstimmende Durchmesser d₂ von 0,17 mm bis 0,20 mm, insbesondere von 0,175 mm, auf, wobei der Durchmesser d₂ der Lagenfilamente 2 um mindestens 0,01 mm, vorzugsweise um mindestens 0,02 mm, kleiner ist als der Durchmesser d₁ des Kernfilaments 1. Bei einer bevorzugten Ausführung weist der Stahlkord ein Kernfilament 1 mit einem Durchmesser d₁ von 0,20 mm und sechs Lagenfilamente 2 mit einem Durchmesser d₂ von 0,175 mm auf.

Zur Herstellung einer solche Stahlkorde aufweisenden Karkasslage werden die Stahlkorde durch Kalandrieren in eine der üblichen Gummierungsmischungen eingebettet, wobei in der nicht vulkanisierten kalandrierten Karkasslage die Anzahl der Stahlkorde 90 epdm bis 120 epdm (ends per decimeter) beträgt.

Im fertig hergestellten, vulkanisierten Nutzfahrzeugreifen beträgt die Anzahl der Stahlkorde im Reifenzenit bzw. entlang der Äquatorialebene des Reifens, je nach Reifendimension, 60 epdm bis 75 epdm.

### Bezugsziffernliste

- 1 .......................: Kernfilament
- 2 .......................: Lagenfilament
- d₁, d₂ ................: Durchmesser

## Patentansprüche

1. Nutzfahrzeugreifen in Radialbauart mit einer Querschnittshöhe von 135 mm bis 200 mm, einem Lastindex von 121 bis 154, einer Radialkarkasse mit zumindest einer Karkasslage aus in Gummi eingebetteten Stahlkorden und mit Wulstbereichen mit Wulstkernen und Kernprofilen, um welche die Karkasslage Hochschläge bildend verläuft,
**dadurch gekennzeichnet,**
**dass** die Karkasslage mit Stahlkorden der Konstruktion 1 + 6 verstärkt ist, wobei das Kernfilament (1) einen Durchmesser (d₁) von 0,19 mm bis 0,22 mm aufweist und die Lagenfilamente (2) übereinstimmende Durchmesser (d₂) von 0,17 mm bis 0,20 mm aufweisen, wobei der Durchmesser (d₂) der Lagenfilamente (2) um mindestens 0,01 mm kleiner ist als der Durchmesser (d₁) des Kernfilaments (1) und wobei im Reifenzenit die Stahlkorde in der Karkasslage mit 60 epdm bis 75 epdm angeordnet sind.

2. Nutzfahrzeugreifen nach Anspruch 1, **dadurch gekennzeichnet, dass** der Durchmesser (d₂) der Lagenfilamente (2) um mindestens 0,02 mm kleiner ist als der Durchmesser (d₁) des Kernfilaments (1).

3. Nutzfahrzeugreifen nach Anspruch 1 oder 2, **dadurch gekennzeichnet, dass** die Filamente (1, 2) eine Zugfestigkeit von mindestens 3200 N/mm² aufweisen.

4. Nutzfahrzeugreifen nach einem der Ansprüche 1 bis 3, **dadurch gekennzeichnet, dass** die Lagenfilamente (2) mit einer Schlaglänge von 10,0 mm bis 14,0 mm um das Kernfilament (1) verdrillt sind.

5. Nutzfahrzeugreifen nach Anspruch 4, **dadurch gekennzeichnet, dass** die Schlaglänge 12,5 mm beträgt.

6. Nutzfahrzeugreifen nach einem der Ansprüche 1 bis 5, **dadurch gekennzeichnet, dass** das Kernfilament (1) einen Durchmesser (d₁) von 0,20 mm aufweist und die Lagenfilamente (2) einen Durchmesser (d₂) von 0,175 mm aufweisen.

## Claims

1. Commercial vehicle tyre of a radial type of construction with a cross-sectional height of 135 mm to 200 mm, a load index of 121 to 154, a radial-ply casing with at least one casing ply comprising steel cords embedded in rubber and with bead regions comprising bead cores and bead fillers, around which the casing ply runs, thereby forming turn-ups,
**characterized in that**
the casing ply is reinforced with steel cords of the construction 1 + 6, wherein the core filament (1) has a diameter (d₁) of 0.19 mm to 0.22 mm and the ply filaments (2) have coinciding diameters (d₂) of 0.17 mm to 0.20 mm, wherein the diameter (d₂) of the ply filaments (2) is less than the diameter (d₁) of the core filament (1) by at least 0.01 mm and wherein, at the crown of the tyre, the steel cords are arranged in the casing ply with 60 epdm to 75 epdm.

2. Commercial vehicle tyre according to Claim 1, **characterized in that** the diameter (d₂) of the ply filaments (2) is less than the diameter (d₁) of the core filament (1) by at least 0.02 mm.

3. Commercial vehicle tyre according to Claim 1 or 2, **characterized in that** the filaments (1, 2) have a tensile strength of at least 3200 N/mm².

4. Commercial vehicle tyre according to one of Claims 1 to 3, **characterized in that** the ply filaments (2) are twisted around the core filament (1) with a length of lay of 10.0 mm to 14.0 mm.

5. Commercial vehicle tyre according to Claim 4, **characterized in that** the length of lay is 12.5 mm.

6. Commercial vehicle tyre according to one of Claims 1 to 5, **characterized in that** the core filament (1) has a diameter (d₁) of 0.20 mm and the ply filaments (2) have a diameter (d₂) of 0.175 mm.

## Revendications

1. Pneumatique de véhicule utilitaire de construction radiale comprenant une hauteur en section transversale de .135 mm à 200 mm, un indice de charge de 121 à 154, une carcasse radiale avec au moins une couche de carcasse constituée de câbles d'acier noyés dans du caoutchouc et des régions de talon avec des noyaux de talon et des profils de noyaux autour desquels la couche de carcasse s'étend en formant des relèvements,
**caractérisé en ce que**
la couche de carcasse est renforcée avec des câbles d'acier de construction 1 + 6, le filament de noyau (1) présentant un diamètre (d₁) de 0,19 mm à 0,22 mm et les filaments de couche (2) présentant des diamètres correspondants (d₂) de 0,17 mm à 0,20 mm, le diamètre (d₂) des filaments de couche (2) étant inférieur d'au moins 0,01 mm au diamètre (d₁) du filament de noyau (1) et les câbles d'acier étant disposés au zénith du pneu dans la couche de carcasse avec 60 epdm à 75 epdm.

2. Pneumatique de véhicule utilitaire selon la revendication 1, **caractérisé en ce que** le diamètre (d₂) des filaments de couche (2) est inférieur d'au moins 0,02 mm au diamètre (d₁) du filament de noyau (1) .

3. Pneumatique de véhicule utilitaire selon la revendication 1 ou 2, **caractérisé en ce que** les filaments (1, 2) présentent une résistance à la traction d'au moins 3200 N/mm².

4. Pneumatique de véhicule utilitaire selon l'une quelconque des revendications 1 à 3, **caractérisé en ce que** les filaments de couche (2) sont torsadés avec un pas de câblage de 10,0 mm à 14,0 mm autour du filament de noyau (1).

5. Pneumatique de véhicule utilitaire selon la revendication 4, **caractérisé en ce que** le pas de câblage est de 12,5 mm.

6. Pneumatique de véhicule utilitaire selon l'une quelconque des revendications 1 à 5, **caractérisé en ce que** le filament de noyau (1) présente un diamètre (d₁) de 0,20 mm et les filaments de couche (2) présentent un diamètre (d₂) de 0,175 mm.
